Europäisches Patentamt

European Patent Office

Office européen des brevets

(19)

(11) Numéro de publication: **0 109 691**
**B1**

(12) # FASCICULE DE BREVET EUROPEEN

(45) Date de publication du fascicule du brevet:
24.06.87

(51) Int. Cl.⁴: **C 13 C 1/06**, C 13 C 1/08

(21) Numéro de dépôt: **83111664.5**

(22) Date de dépôt: **22.11.83**

(54) **Coupe-racines à tambour.**

(30) Priorité: **23.11.82 FR 8219607**

(43) Date de publication de la demande:
**30.05.84 Bulletin 84/22**

(45) Mention de la délivrance du brevet:
**24.06.87 Bulletin 87/26**

(84) Etats contractants désignés:
**AT BE DE GB IT NL SE**

(56) Documents cités:
**FR - A - 325 314
FR - A - 860 489
FR - A - 1 252 370
US - A - 2 148 922
US - A - 2 197 192**

(73) Titulaire: **MAGUIN S.A., B.P. no. 1 Charmes, F-02800 La Fère (FR)**

(72) Inventeur: **Swiderski, Michel, Rogecourt, F-02800 La Fere (FR)**

(74) Mandataire: **Casalonga, Axel et al, BUREAU D.A. CASALONGA OFFICE JOSSE & PETIT Morassistrasse 8, D-8000 München 5 (DE)**

## Description

La présente invention se rapporte à un coupe-racines à tambour servant à couper des betteraves en cossettes d'où on extrait le sucre par diffusion. Un tel coupe-racines comprend un tambour à axe sensiblement horizontal, ouvert sur un côté frontal, ce tambour étant monté en rotation sur un bâti équipé d'une trémie d'alimentation débouchant sur le côté ouvert du tambour. Le tambour est formé d'une roue ou lanterne qui est solidaire d'un arbre entraîné en rotation et à laquelle sont fixés en porte-à-faux une multitude de bras axiaux répartis uniformément sur le pourtour de la lanterne et faisant saillie en direction du côté ouvert du tambour. Les bras de lanterne reçoivent entre eux des porte-couteaux auxquels sont fixés des couteaux qui, lors de la rotation du tambour, coupent en cossettes les betteraves se trouvant dans le tambour. Les couteaux ont des tranchants en zig-zag, les tranchants des couteaux successifs étant décalés d'un demi-pas. Les porte-couteaux et le tambour comportent des moyens pour positionner les porte-couteaux sur le tambour (FR-A 325 314).

Dans les coupe-racines à tambour connus de ce type, les porte-couteaux identiques sont multiples et comportent chacun au moins deux rangées de couteaux différents dits couteaux A et couteaux B. Ces deux sortes de couteaux se distinguent par le décalage d'un demi-pas de leur tranchants en zig-zag, décalage qui est nécessaire pour permettre le découpage des betteraves en cossettes en V à ailes égales dites cossettes faîtières. En effet, aussi bien la fixation des couteaux aux porte-couteaux que la fixation des porte-couteaux aux bras de lanterne s'effectue à l'aide de vis, dans des positions réciproques bien déterminées suivant l'axe du tambour.

Si l'on considère, en plus, que pour obtenir un fonctionnement optimal d'un coupe-racines, il est nécessaire d'utiliser des couteaux ayant des pas (ou divisions) différents en fonction de la qualité des betteraves, on arrive à un nombre impressionnant de couteaux pour un coupe-racines.

Sur les coupe-racines connus à tambour, le changement des porte-couteaux doubles, donc lourds comprend les opérations de desserrage des vis de fixation des porte-couteaux aux bras de lanterne, de déblocage des porte-couteaux des bras de lanterne, d'enlèvement des porte-couteaux, d'introduction des nouveaux porte-couteaux et de resserrage des vis de fixation, ces opérations s'effectuant à travers une ouverture frontale et une ouverture latérale du carter entourant le tambour. Il s'agit là d'opérations pénibles et longues. De plus, les surfaces de contact des porte-couteaux et des bras de lanterne doivent être usinées avec grande précision afin de garantir aux couteaux une position bien déterminée nécessaire en vue de l'obtention d'une bonne qualité de cossettes.

Enfin, il convient de noter que les bras de lanterne et les porte-couteaux se trouvent en partie en contact avec les betteraves et subissent ainsi une usure, ce qui nécessite un remplacement périodique des bras de lanterne et des porte-couteaux ou des pièces d'usure rapportées sur ces éléments.

Il est par ailleurs connu, pour des coupe-racines à axe de rotation vertical (FR-A 1 252 370 et US-A 21 489 d'introduire des porte-couteaux à plusieurs rangées de couteaux par coulissement dans des glissières. La présente invention a pour objet un coupe-racines à tambour utilisant, sur des porte-couteaux tous identiques, un seul type de couteaux, même éventuellement pour des qualités de betteraves différentes. L'invention a également pour objet un coupe-racines à tambour nettement moins sujet à l'usure que les coupe-racines connus. L'invention a en outre pour objet un coupe-racines à tambour n'impliquant pas d'usinage compliqué et de très grande précision des surfaces de contact des porte-couteaux et des bras de lanterne. L'invention a par ailleurs pour objet un coupe-racines à tambour sur lequel le changement des porte-couteaux s'effectue de façon simple et rapide. L'invention a enfin pour objet d'automatiser dans une large mesure le changement des porte-couteaux sur un coupe-racines à tambour.

Sur le coupe-racines à tambour suivant l'invention, les porte-couteaux tous identiques sont conçus pour recevoir chaucun une seule rangée de couteaux tous d'un seul type et présentent chacun sur ses deux bords longitudinaux opposés, des surfaces de contact adaptées aux bras de lanterne et comportant une partie en contre-dépouille vers l'intérieur et une partie en contre-dépouille vers l'extérieur du tambour, de manière que chaque porte-couteaux puisse être engagé axialement entre deux bras de lanterne voisins et soit retenu sur lesdits bras aussi bien vers l'extérieur que vers l'intérieur du tambour, et que les moyens pour positionner les porte-couteaux sur le tambour comprennent des butées axiales d'épaisseurs différentes pour les porte-couteaux, disposées sur la lanterne, et des moyens prévus sur les porte-couteaux et le tambour pour maintenir les porte-couteaux appuyés axialement contre lesdites butées.

Les bras de lanterne et les rainures des porte-couteaux assurent, grâce à leurs formes complémentaires, un positionnement radial précis des porte-couteaux, donc des couteaux, sans moyens supplémentaires tel que des vis pour la fixation des porte-couteaux au bras de lanterne. La mise en place et l'enlèvement des porte-couteaux par coulissement axial sur les bras de lanterne sont des opérations simples, d'autant plus que les porte-couteaux à une seule rangé de couteaux sont légers. Les moyens de positionnement axial des porte-couteaux sur la lanterne permettent d'utiliser, pour un coupe-racines, un seul type de porte-couteaux et un seul type de couteaux et d'obtenir néanmoins un décalage axial des couteaux successifs.

De préférence, les bras de lanterne présentent un profil circulaire et les porte-couteaux présentent des rainures (15) ayant un profil correspondant en arc de cercle, la partie de chaque rainure en contre-dépouille vers l'intérieur du tambour s'étendant sur un arc de cercle sensiblement égal à 90°. Ainsi, deux porte-couteaux voisins entourent le bras de lanterne intermédiaire pratiquement sur toute la moitié de circonférence tournée vers l'intérieur du tambour et empêchent ainsi les betteraves d'entrer en contact avec le bras de lanterne, ce qui supprime tout risque d'usure à cet endroit.

Les moyens pour maintenir les porte-couteaux appuyés axialement contre les butées comprennent avantageusement des dispositifs d'encliquetage. Ces dispositifs d'encliquetage n'ont pas à supporter d'effort considérable et leur actionnement est simple et aisé.

Suivant un mode de réalisation préféré, les butées axiales sont fixées de façon amovible sur la lanterne et peuvent être échangées contre des butées d'épaisseurs différentes.

Le dispositif d'encliquetage servant à serrer les porte-couteaux contre les butées axiales comprennent avantageusement, sur le porte-couteaux ou la lanterne, pour chaque porte-couteaux, au moins un loquet à double rampe, sollicité par un ressort, et sur la lanterne ou le porte-couteaux, un épaulement d'enclique tage également à double rampe pour ledit loquet, permettant l'engagement et le dégagement par un simple effort axial exercé sur le porte-couteaux, dans un sens ou dans l'autre, et le serrage axial contre la butée, indépendamment des différences d'épaisseur de cette dernière. Le changement des porte-couteaux est ainsi extrêmement simple et rapide puisqu'il suffit, pour enlever un porte-couteau de la lanterne, d'exercer un effort axial sur le porte-couteau pour dégager le loquet de l'épaulement et retirer ainsi par coulissement axial le porte-couteaux de la lanterne, alors que pour mettre en place un porte-couteaux sur la lanterne, il suffit de l'engager par coulissement axial sur la lanterne, entre deux bras de lanterne, le positionnement axial ayant lieu à la fin de ce mouvement axial de mise en place, par engagement du loquet derrière l'épaulement d'encliquetage.

Pour simplifier et accélérer le changement des porte-couteaux, le coupe-racines à tambour suivant l'invention comprend avantageusement un dispositif de rotation pas à pas du tambour, comprenant un premier vérin portant des moyens susceptibles de coopérer dans le sens de poussée dudit vérin avec un bras de lanterne, en vue de déplacer le tambour angulairement d'un pas, et un second vérin pour amener lesdits moyens en position de coopération avec le bras de lanterne pendant le mouvement de poussée dudit premier vérin et les amener hors de la position de coopération avec le bras de lanterne pendant le mouvement de retrait dudit premier vérin. Ce dispositif de rotation pas à pas permet une rotation intermittente précise du tambour lors du changement successif des porte-couteaux.

Pour augmenter encore la précision de positionnement angulaire du tambour pendant la rotation pas à pas, il est avantageux de prévoir un dispositif de positionnement angulaire du tambour, comprenant de préférence un vérin de blocage monté sur le bâti dans une position sensiblement radiale par rapport au tambour et portant des moyens coopérant avec un bras de lanterne pour bloquer ledit bras lorsque le vérin est alimenté dans un sens et libérer ledit bras lorsque le vérin est alimenté dans l'autre sens. Lesdits moyens prévus sur le dispositif de rotation pas à pas et le dispositif de positionnement pour coopérer avec les bras de lanterne sous l'action des vérins sont avantageusement conçus de manière qu'ils ne puissent pas s'engager entre deux bras de lanterne voisins et viennent, sous l'action des vérins, automatiquement en position de coopération avec les bras de lanterne.

Pour simplifier et accélérer encore l'opération de changement des porte-couteaux sur la lanterne, le coupe-racines suivant l'invention peut avantageusement comporter un dispositif automatique d'introduction d'un porte-couteaux et de retrait automatique d'un porte-couteaux. Ce dispositif d'introduction et de retrait automatique implique un positionnement angulaire très précis du tambour, positionnement qui peut être réalisé de manière avantageuse par le dispositif de rotation pas à pas et le dispositif de positionnement tels que définis ci-dessus. Ce dispositif d'introduction et de retrait automatique comprend un berceau de chargement et un berceau de déchargement montés en position fixe du côté ouvert du tambour, le berceau de chargement étant destiné à recevoir un porte-couteaux à introduire, mis en place de l'extérieur sur le berceau, et le berceau de déchargement étant destiné à recevoir un porte-couteaux retiré du tambour et devant être déchargé vers l'extérieur. Ce dispositif comprend, en outre, des moyens d'introduction d'un porte-couteaux dans le tambour et de retrait d'un porte-couteaux du tambour, lesdits moyens étant animés conjointement d'un mouvement de va-et-vient suivant l'axe du tambour, pour pousser le porte-couteaux du berceau de chargement dans le tambour pendant le mouvement aller et pour retirer un porte-couteaux du tambour sur le berceau de déchargement pendant le mouvement de retour.

On va décrire ci-après plus en détail un mode de réalisation illustratif et non limitatif d'un coupe-racines à tambour suivant l'invention illustré par les dessins annexés, sur lesquels:

la fig. 1 est une vue d'ensemble schématique d'un coupe-racines à tambour suivant l'invention avec dispositif d'introduction et de retrait automatique des porte-couteaux;

la fig. 2 est une vue en plan de deux porte-couteaux en place sur le tambour;

la fig. 3 est une longitudinale suivant IIIIII de la fig. 2;

la fig. 4 est une coupe transversale suivant IV-IV de la fig. 2;

la fig. 5 est une vue schématique du dispositif de rotation pas à pas et de positionnement angulaire du tambour;

les fig. 6 et 7 représentent une coupe axiale et une vue en plan d'une partie du tambour du coupe-racines, avec le dispositif d'introduction et de retrait automatique des porte-couteaux;

la fig. 8 est une coupe suivant VIII–VIII de la fig. 7.

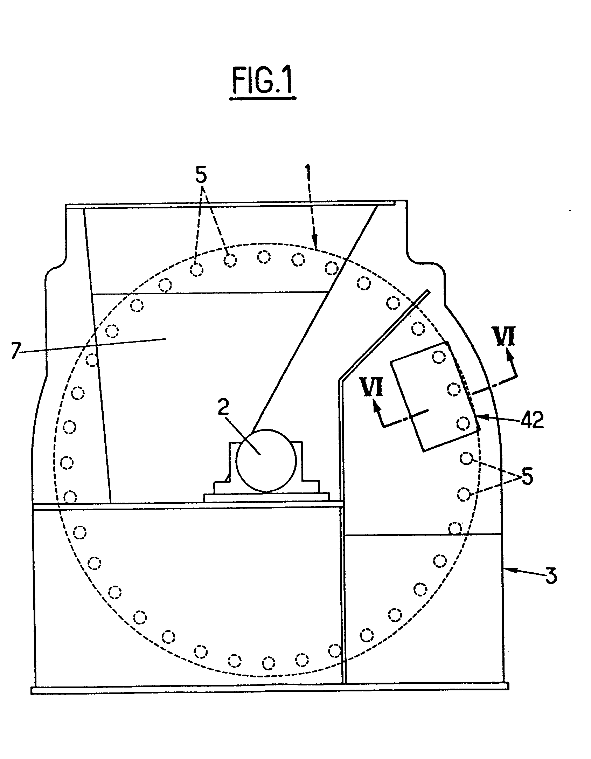

Le coupe-racines à tambour illustré par les dessins comprend, selon la fig. 1, un tambour 1 à axe horizontal, monté en rotation sur un bâti mécanosoudé référencé 3 dans son ensemble.

Le tambour 1 est, de façon connue en soi, composé d'une roue ou lanterne 4 solidaire de l'arbre 2 entraîné en rotation et à laquelle sont fixés en porte-à-faux une multitude de bras de lanterne parallèles à l'axe du tambour 5. Le tambour 1 est donc ouvert sur le côté frontal opposé à la lanterne 4.

Devant le côté ouvert du tambour 1, un flasque 6 est installé sur le bâti 3. Ce flasque 6 porte une trémie d'alimentation 7 débouchant dans le tambour 1, d'un côté de l'arbre 2. Ce flasque 6 porte, par ailleurs, une paroi dite «virgule» de compression de l'autre côté de l'arbre 2, à l'intérieur du tambour, un disque fixe 8 situé, à l'intérieur du tambour, devant la lanterne 4 et une tôle de couverture 9 fixe qui recouvre intérieurement le tambour dans la partie supérieure. Cette structure générale du coupe-racines suivant l'invention correspond sensiblement à celle des coupe-racines à tambour connus.

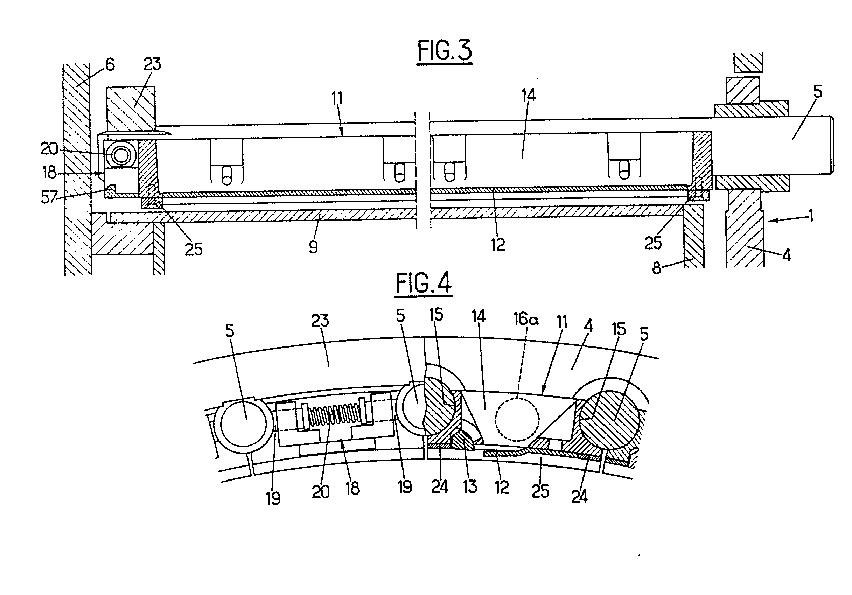

Les bras de lanterne 5 qui recoivent les porte-couteaux sur lesquels sont fixés les couteaux réduisant en cossettes les betteraves dans la partie inférieure du tambour, lors de la rotation de ce dernier, sont constitués par des barres massives cylindriques fixées dans la lanterne 4. Tel que cela apparaît surtout sur la fig. 4, chaque porte-couteaux 11 de forme générale rectangulaire, maintenu entre deux bras de lanterne 5 voisins, est équipé d'une seule rangée de couteaux 12 et d'une baguette 13 de réglage de la profondeur de coupe, c'est-à-dire de l'épaisseur des cossettes. L'évacuation des cossettes vers l'extérieur du tambour s'effectue par une ouverture 14 prévue dans le porte-couteaux 11 sur toute la longueur des couteaux 12. Chaque porte-couteaux 11 présente, sur chacun de ses deux bords longitudinaux opposés, une rainure 15 en arc de cercle, ayant un profil complémentaire de celui des bras de lanterne 5. Chaque rainure 15 s'étend sur un arc de cercle de plus de 90° de manière à présenter une partie en contre-dépouille vers l'intérieur et vers l'extérieur, ce qui fait que les porte-couteaux sont maintenus par rapport aux bras 5 aussi bien vers l'intérieur que vers l'extérieur du tambour. Afin d'éviter tout contact des betteraves avec les bras 5, contact qui pourrait provoquer de l'usure, chaque porte-couteau 11 recouvre les deux bras de lanterne 5 voisins entre lesquels il est maintenu, du côté intérieur du tambour jusqu'au voisinage du plan radial passant par l'axe du bras 5 considéré. De ce fait, comme représenté sur la fig. 4 les porte-couteaux 11 voisins recouvrent ensemble presque complètement vers l'intérieur du tambour le bras de lanterne 5 qui leur est commun.

Les porte-couteaux 11 qui sont ainsi positionnés radialement vers l'intérieur et vers l'extérieur du tambour, grâce à la complémentarité de forme de leurs rainures 15 et des bras de lanterne 5, sont donc montés coulissants sur les bras de lanterne 5 en vue de leur mise en place et de leur retrait sur les bras de lanterne par translation suivant l'axe du tambour. Le positionnement axial des porte-couteaux 11 par rapport au tambour 1 s'effectue à l'aide de butées 16, 16a fixées à l'aide de vis 17 à la lanterne 4 du tambour 1. Chaque porte-couteaux 11 est maintenu en appui contre sa butée 16, 16a par un dispositif d'encliquetage 18 prévu à l'extrémité opposée du porte-couteaux 11. Ce dispositif d'encliquetage 18 comprend deux loquets 19 à double rampe, montés transversalement sur le porte-couteau 11 et sollicité en sens opposés par un ressort commun 20. Chaque loquet 19 coopère, lorsque le porte-couteaux 11 arrive en position d'appui contre la butée 16, 16a, avec un épaulement 21 à double rampe, formé à l'extrémité libre de chaque bras de lanterne 5.

Grâce à la double rampe de chaque loquet 19 et de chaque épaulement 21, les deux loquets 19 de chaque porte-couteaux 11 franchissent d'eux-mêmes les deux épaulements 21 des deux bras de lanterne 5, lors de l'enfoncement axial du porte-couteau 11 entre les deux bras 5 et assurent ensuite l'appui de porte-couteau 11 contre la butée 16, 16a. Inversement, pour enlever un porte-couteaux 11 d'entre deux bras de lanterne 5, il suffit d'exercer une traction en direction du côté ouvert du tambour 1 sur le porte-couteaux 11 pour dégager les loquets 19 des épaulements 21, le porte-couteau 11 pouvant ensuite être extrait complètement par coulissement axial.

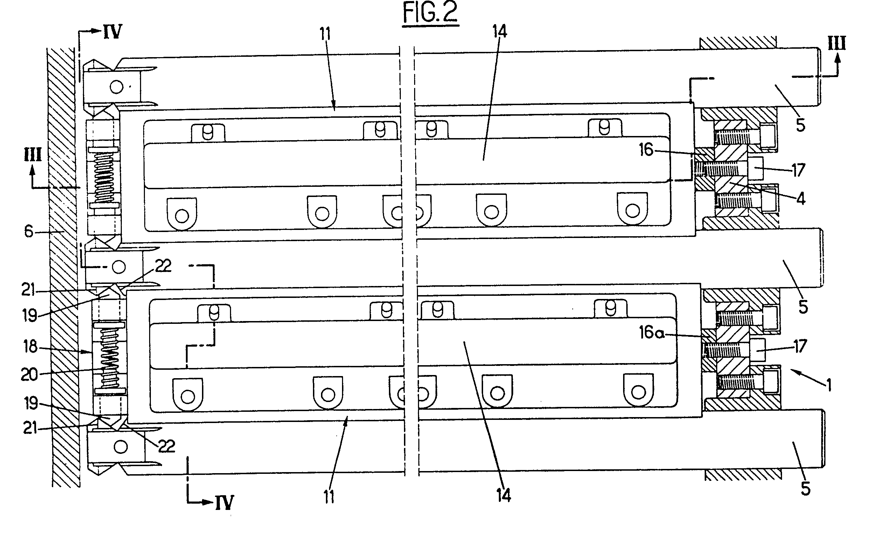

Il y a lieu de noter que les butées axiales 16, 16a successives présentent en alternance des épaisseurs différentes. Cette différence d'épaisseur qui est visible entre la butée 16 et la butée 16a sur la fig. 2 correspond à un demi-pas ou une demi-division des tranchants en zig-zag des couteaux. Il est bien connu que sur un coupe-racines, les couteaux successifs doivent être décalés d'un demi-pas en vue de l'obtention de cossettes faîtières, c'est-à-dire de cossettes en V à ailes égales. Ce décalage d'un demi-pas qui s'effectue de façon usuelle par l'utilisation de deux types de couteaux sur un même porte-couteaux est donc réalisé ici uniquement par les butées de positionnement axial 16, 16a alors que les couteaux et les porte-couteaux équipant le coupe-racines sont tous identiques. Le fonctionnement du dispositif d'encliquetage 18 n'est pas affecté par ce décalage axial des porte-couteaux successifs grâce au fait que l'encoche 22 qui définit la rampe de retenue de l'épaulement 21 est suffisamment profonde pour que le loquet 19 puisse prendre appui sur cette rampe de retenu dans les deux positions axiales déterminées par les butées 16, 16a d'épaisseurs différentes.

Les différents bras de lanterne 5 sont reliés entre eux, à leur extrémité libre, par un cercle extérieur 23 disposé de manière à ne pas entraver l'engagement et le dégagement axial des porte-couteaux 11 entre les bras de lanterne 5.

Des plats d'usure longitudinaux 24 sont rapportés sur chaque porte-couteaux 11, sur les parties exposées au contact des betteraves, c'est-à-dire entre la baguette de réglage 13 et un bord longitudinal, et entre le talon des couteaux 12 et l'autre bord longitudinal. Par ailleurs, des plats d'usure 25 en forme d'arc sont rapportés sur les bords extrêmes transversaux du porte-couteaux 11. Le plat d'usure 25 fixé sur l'extrémité du porte-couteaux 11 qui vient porter contre la butée 16 (extrémité de droite sur la fig. 3) est disposé sur le porte-couteaux 11 de manière que, quelle que soit la butée 16, 16a, ledit plat 25 se trouve toujours en retrait (vers la droite sur la fig. 3) par rapport au disque intérieur fixe 8.

Ainsi, on est assuré que les betteraves se trouvant au voisinage de cette extrémités sont également réduites en cossettes par les couteaux 12 plutôt que d'être réduites en râpure par abrasion.

Le changement des porte-couteaux s'effectue périodiquement et porte chaque fois sur l'ensemble des porte-couteaux du tambour. Il est donc nécessaire, pour changer l'ensemble des porte-couteaux, d'amener successivement tous les porte-couteaux du tambour en position de changement, de retirer chaque fois le porte-couteaux se trouvant en position de changement et de le remplacer par un nouveau porte-couteaux.

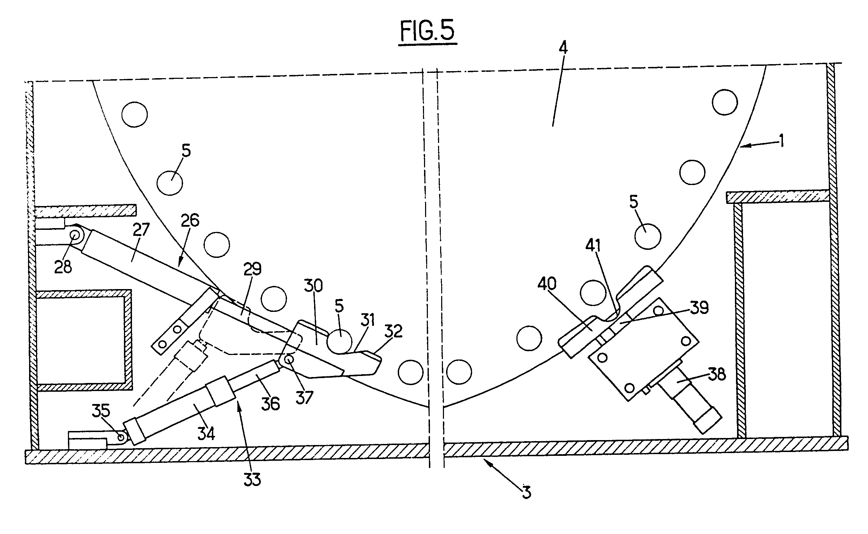

La fig. 5 illustre un dispositif de rotation pas à pas et de positionnement permettant d'amener les différents porte-couteaux du tambour successivement en position de changement.

Le dispositif de rotation pas à pas comprend un vérin de poussée 26 dont le cylindre 27 est articulé sur le bâti 3 par un axe 28 parallèle à l'axe du tambour 4. La tige de piston 29 du vérin 26 porte, à son extrémité, une ferrure 30 présentant une encore 31 dans sa face 32 qui est parallèle à la tige de piston 29 et est tournée vers le tambour 4. L'encoche 32 est définie par un profil en arc de cercle sur plus de 90°, sur le côté tourné vers le vérin 26, et par un flanc rectiligne oblique sur le côté opposé, ce flanc rectiligne étant tel que l'encoche 31 s'élargisse depuis son fond jusqu'à son débouché sur la face 32.

Un autre vérin 33 est installé dans le même plan vertical que le vérin 26, le cylindre 34 du vérin 33 étant articulé par un axe 35 parallèle à l'axe du tambour 4 sur le bâti 3. La tige de piston 36 du vérin 33 est articulée par un axe 37 parallèle à l'axe du tambour 4 sur la ferrure 30.

Les deux vérins 26, 33 sont disposés dans le plan des extrémités arrière des bras de lanterne 5 débordant quelque peu de la lanterne 4 (voir fig. 2 et 3), dans des positions telles l'un par rapport à l'autre et par rapport au tambour 4 que lorsque les tiges de piston 29 et 36 sont complètement retirées dans les cylindres 27 et 34 des vérins 26 et 33, la ferrure 30 puisse, par une poussée exercée par le vérin 33, être amenée à coopérer par son encoche 31, avec un bras de lanterne 5. Une poussée exercée par le vérin 26 permet alors de faire tourner le tambour 4 d'un pas.

Le dispositif de positionnement angulaire qui sert à maintenir le tambour dans une position angulaire bien définie pendant que la ferrure 30 du dispositif de rotation pas à pas n'est pas en prise avec un bras de lanterne 5 comprend un vérin 38 installé à poste fixe sur le bâti 3, dans une position radiale par rapport au tambour 4. La tige de piston 39 du vérin 38 porte une ferrure 40 présentant une encoche 41 sensiblement demi-circulaire, débouchant en direction du tambour 4 et susceptible de s'engager sur l'extrémité arrière débordante d'un bras de lanterne 5 lorsque la ferrure 40 est avancée en direction du tambour 4 sous l'action du vérin 38. Le vérin 38 est disposé, par rapport aux vérins 26 et 33, de telle manière qu'un bras de lanterne 5 se trouve en face de l'encoche 41 lorsque le tambour 4 a été avancé d'un pas par le vérin 26.

Il convient de noter que les vérins 33 et 38 peuvent être des vérins à basse pression puisqu'ils n'ont pas à exercer d'effort de poussée considérable tandis que le vérin 26 dont la poussée fait tourner le tambour 4 est avantageusement un vérin à haute pression.

Il convient également de noter que le dispositif de rotation pas à pas qui n'intervient que pour le changement des porte-couteaux fait tourner le tambour dans le sens contraire au sens de rotation pendant le fonctionnement normal.

Afin d'assurer que, quelle que soit la position angulaire qu'occupe le tambour 4, à la suite d'un arrêt du fonctionnement normal, avant l'intervention du dispositif de rotation pas à pas et de positionnement, que ce dispositif vienne coopérer correctement avec les bras de lanterne 5 du tambour 4, les ferrures 30 et 40 présentent, dans le sens circonférentiel du tambour 4, chacune une longueur supérieure à la distance entre deux bras de lanterne 5 successifs. Les deux ferrures 30 et 40 sont en outre garnies d'un matériau ayant de bonnes propriétés de glissement sur leur côté tourné vers le tambour 4.

Un cycle de rotation et de positionnement correspondant à une avance d'un pas du tambour 4 comprend, dans l'ordre, les opérations suivantes, en admettant que le dispositif se trouve dans la position représentée en trait plein sur la fig. 1 (vérins 26 et 33 en fin de poussée, vérin 38 en retrait).

Poussée du vérin 38.
Retrait du vérin 33.
Retrait du vérin 26.
Poussée du vérin 33.
Retrait du vérin 38.
Poussée du vérin 26.

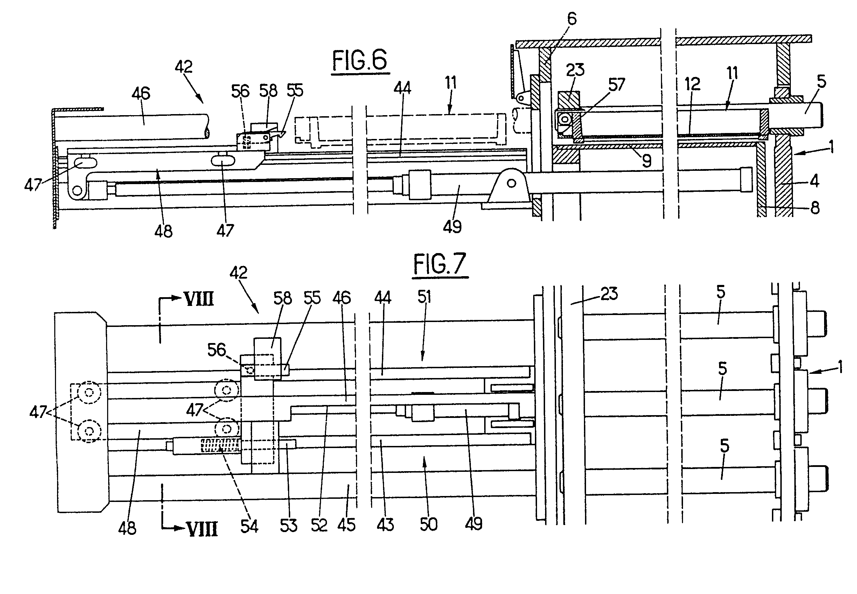

Ce dispositif de rotation pas à pas et de positionnement est particulièrement avantageux lorsque le coupe-racines à tambour est équipé d'un dispositif automatique de retrait et d'introduction des porte-couteaux, tel qu'illustré par les fig. 6, 7 et 8.

Ce dispositif automatique de retrait et d'introduction, référencé 42 dans son ensemble, est monté en position fixe en avant du côté ouvert du tambour, sur le flasque 6.

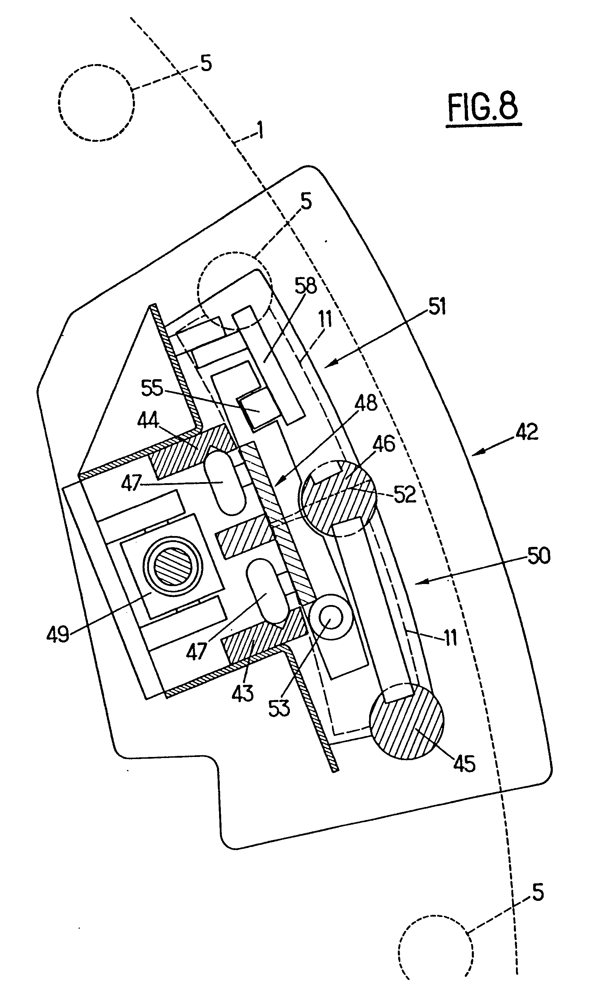

Le dispositif 42 situé en face de la partie supérieure du tambour (voir fig. 1) comprend une structure de support formée principalement par deux rails de guidage 43, 44 et deux barres 45 et 46 parallèles à l'axe du tambour, le tout étant fixé sur le flasque 6. La position réciproque des rails 43, 44 et des barres 45, 46 apparaît sur la fig. 8. Les deux rails 43 et 44 sont disposés, à l'intérieur du cercle décrit par les bras de lanterne 5 lors de la rotation du tambour 1, dans un plan sécant audit cercle. Les deux barres 45 et 46 sont disposées sur ledit cercle, à une distance réciproque correspondant à la distance entre deux bras de lanterne 5. La barre 45 est située en dessous du rail inférieur 46, tandis que la barre 47 se trouve à une hauteur comprise entre le rail inférieur 43 et le rail supérieur 44.

Les deux rails 43, 44 comportent, dans leurs faces tournées l'une vers l'autre, chacun une rainure pour le guidage des roues 47 d'un chariot 48 mobile en va-et-vient le long des rails 43 et 44 sous l'action d'un vérin 49.

Le rail 43 et la barre 45 constituent, ensemble, un berceau 50 de chargement, alors que le rail 44 et la barre 46 forment ensemble un berceau de déchargement 51. Le berceau de chargement 50 est destiné à recevoir un porte-couteaux devant être introduit dans le tambour 1, tandis que le berceau de déchargement 51 est destiné à recevoir un porte-couteau retiré du tambour 1.

Sur la fig. 8, on a indiqué en tiret la position des deux porte-couteaux 11 en question sur le berceau de chargement 50 et le berceau de déchargement 51. Le porte-couteaux 11 sur le berceau de chargement 50 est engagé de l'extérieur (de la droite sur la fig. 8) par l'une de ses rainures en arc de cercle sur la barre inférieure 45 qui présente un profil circulaire correspondant à celui des bras de lanterne 5 et est appuyé en position inclinée par rapport à la verticale contre le rail inférieur 43. De façon analogue, le porte-couteaux 11 sur le berceau de déchargement 51 est engagé par l'une de ses rainures en arc de cercle sur la barre inférieure 46 qui présente également un profil circulaire correspondant à celui des bras de lanterne 5 et est appuyé en position inclinée par rapport à la verticale contre le rail 44.

Il y a lieu de noter que dans la zone du berceau de chargement 50, la barre supérieure 46 présente, sur une longueur légèrement supérieure à la longueur des porte-couteaux 11, une découpe 52 intéressant plus de la moitié inférieure de sa section. Cette découpe 52 est nécessaire pour permettre la mise en place du porte-couteaux 11 sur le berceau de chargement 50.

Le chariot 48 porte, en face du berceau de chargement 50, un poussoir 53 sollicité par un ressort 54. En face du berceau de déchargement 51, le chariot 48 porte un crochet 55 sollicité par un ressort 56 dans le sens d'accrochage, à savoir vers le bas sur la fig. 6. Ce crochet 55 qui présente une rampe à son extrémité libre est destiné à coopérer avec un nez 57 (voir également fig. 3) prévu sur chaque porte-couteau 11, en dessous du dispositif d'encliquetage 18. Dans la position de retrait du chariot 48, telle qu'elle est illustrée par les fig. 6 et 7, le crochet 55 est amené en position de libération à l'encontre de l'action du ressort 56, par une came 58 fixe.

Le fonctionnement du dispositif automatique de retrait et d'introduction des porte-couteaux, tel qu'illustré par les fig. 6, 7 et 8, sera décrit ci-après.

Lorsque le changement des porte-couteaux 11 du tambour 1 s'impose, le tambour 1 est amené, par le dispositif de rotation pas à pas et de positionnement illustré par la fig. 5, dans une position angulaire dans laquelle les deux barres 45 et 46 du dispositif 42 se trouvent alignées avec deux bras de lanterne 5 voisins. Le berceau de chargement 50 et le berceau de déchargement 51 du dispositif 42 étant vide, on actionne alors le vérin 49 pour déplacer vers le tambour 1 (vers la droite sur les fig. 6 et 7) le chariot 48, jusqu'à ce que le crochet 55 s'engage derrière le nez 57 du porte-couteaux 11 se trouvant en face du berceau 51. Avant cet accrochage, le poussoir 53 a buté contre le porte-couteaux 11 voisin, se trouvant en face du berceau de chargement 50, la compression de son ressort 54 permettant ensuite l'engagement du crochet 55 derrière le nez 57 de l'autre porte-couteaux 11.

On actionne ensuite le vérin 49 dans le sens contraire, pour éloigner le chariot 48 du tambour 1 (vers la gauche sur les fig. 6 et 7) et retirer en même temps du tambour 1 le porte-couteau 11 saisi par le crochet 55, la traction exercée sur ce porte-couteaux 11 surmontant l'action du dispositif d'encliquetage 18. Dès que le porte-couteaux 11 a été complètement retiré du tambour 1, et juste avant que le chariot 48 ait atteint sa position extrême de gauche, le crochet 55 est dégagé du nez 57 du porte-couteau 11 par la came 58, et libère ainsi le porte-couteaux 11 qui reste immobilisé sur le berceau de déchargement 51.

On enlève ensuite (vers la droite sur la fig. 8) le porte-couteaux 11 en question du berceau de déchargement 51 et on met en place, sur le berceau de chargement 50, un nouveau porte-couteaux 11, en engageant ce nouveau porte-couteaux 11 par l'une de ses rainures latérale sur la barre inférieure 45 et en le faisant ensuite pivoter jusqu'en appui contre le rail 43.

On fait avancer le tambour 1 d'un pas, pour amener les deux bras de lanterne 5 entre lesquels se trouvait le porte-couteaux préalablement retiré, en alignement avec les deux barres 45 et 46, c'est-à-dire en face du berceau de chargement 50 et du nouveau porte-couteaux 11 mis en place sur ce berceau.

On actionne ensuite le vérin 49 pour déplacer le chariot 48 vers le tambour 1 et engager ainsi le porte-couteaux 11 se trouvant sur le berceau de chargement 50 dans le tambour 1, le ressort 54 du poussoir 53 étant suffisamment puissant pour surmonter la résistance exercée par le dispositif d'encliquetage 18, de sorte que le porte-couteau introduit se trouve positionné axialement contre sa butée 16. A la fin de cette course du chariot 48, le crochet 55 s'engage derrière le nez 57 du porte-outil 11 voisin.

On actionne alors en sens opposé le vérin 49, pour déplacer le chariot 48 vers la gauche et retirer ainsi du tambour 1 le porte-couteaux 11 sur lequel est enclenché le crochet 55.

Ce cycle se répète ensuite autant de fois que le tambour comporte de porte-couteaux. Toutefois, lors de l'introduction du dernier porte-couteaux dans le tambour, la course du chariot 48 doit être réduite afin que le crochet 55 ne s'engage pas derrière le nez 57 du porte-couteau 11 se trouvant alors en face du berceau de déchargement 51. En effet, ce porte-couteau est le premier à avoir été changé au cours du même cycle. A cet effet, le vérin 49 comporte deux positions de fin de course et un compteur est prévu pour déclencher le changement de position de fin de course lors du dernier mouvement d'introduction.

La commande du dispositif de retrait et d'introduction 42 des porte-couteaux 11 peut être avantageusement combiné avec la commande du dispositif de rotation pas à pas et de positionnement en vue de l'automatisation et de la sécurité des séquences d'un cycle complet de changement de porte-couteaux.

**Revendications**

1. Coupe-racines à tambour servant à couper des betteraves en cossettes faîtières, comprenant un tambour (1) à axe sensiblement horizontal, ouvert sur un côté frontal et monté en rotation sur un bâti (3) équipé d'une trémie d'alimentation (7) débouchant sur le côté ouvert du tambour, ledit tambour étant formé d'une roue ou lanterne (4) qui est solidaire d'un arbre (2) entraîné en rotation et à laquelle sont fixés en porte-à-faux une multitude de bras axiaux (5) répartis sur le pourtour de la lanterne, faisant saillie en direction du côté ouvert du tambour et recevant entre eux des porte-couteaux (11) auxquels sont fixés des couteaux (12) ayant des tranchants en zigzag, les tranchants des couteaux des porte-couteaux successifs étant décalés d'un demi-pas, les porte-couteaux (11) et le tambour (1) comportant des moyens (16, 18) pour positionner les porte-couteaux sur le tambour, caractérisé par le fait que les porte-couteaux (11) tous identiques sont conçus pour recevoir chacun une seule rangée de couteaux (12) tous d'un seul type et présentent chacun, sur ses deux bords longitudinaux opposés, des surfaces de contact adaptées aux bras de lanterne (5) et comportant une partie en contre-dépouille vers l'intérieur et une partie en contre-dépouille vers l'extérieur du tambour, de manière que chaque porte-couteaux (11) puisse être engagé axialement par coulissement entre deux bras de lanterne voisins et soit retenu sur lesdits bras aussi bien vers l'extérieur que vers l'intérieur du tambour (1), et que les moyens pour positionner les porte-couteaux sur le tambour comprennent des butées axiales d'épaisseurs différentes (16, 16a) pour les porte-couteaux, disposées sur la lanterne, et des moyens (18) prévus sur le tambour (1) et les porte-couteaux (11) pour maintenir ces derniers appuyés axialement contre lesdites butées.

2. Coupe-racines suivant la revendication 1, caractérisé par le fait que les bras de lanterne (5) présentent un profil circulaire et que les porte-couteaux présentent des rainures (15) ayant un profil correspondant en arc de cercle, la partie de chaque rainure (15) en contre-dépouille vers l'intérieur du tambour s'étendant sur un arc de cercle sensiblement égal à 90°.

3. Coupe-racines suivant la revendication 1 ou 2, caractérisé par le fait que les moyens (18) pour maintenir les porte-couteaux (11) appuyés axialment contre les butées (16) sont constitués par des dispositifs d'encliquetage.

4. Coupe-racines suivant la revendication 1, caractérisé par le fait que les butées axiales sont fixées de façon amovible sur la lanterne et peuvent être échangées contre des butées d'épaisseurs différentes.

5. Coupe-racines suivant la revendication 3, caractérisé par le fait que le dispositif d'encliquetage comprend, sur le porte-couteaux ou la lanterne, pour chaque porte-couteaux, au moins un loquet (19) à double rampe, sollicité par un ressort (20), et sur la lanterne ou le portecouteaux, un épaulement d'encliquetage (21) également à double rampe pour ledit loquet, permettant l'engagement et le dégagement par un effort axial exercé sur le porte-couteaux, dans un sens ou dans l'autre, et le serrage axial contre la butée.

6. Coupe-racines suivant l'une quelconque des revendications précédentes, caractérisé par le fait qu'il comprend un dispositif de rotation pas à pas du tambour, comprenant un premier vérin (26) portant des moyens (30) susceptible de coopérer dans le sens de poussée dudit vérin avec un bras de lanterne (5) en vue de déplacer le tambour angulairement d'un pas, et un second vérin (33) pour amener lesdits moyens (30) en position de coopération avec le bras de lanterne (5) pendant le mouvement de poussée dudit premier vérin et les amener hors de la position de coopération avec le bras de lanterne pendant le mouvement de retrait dudit premier vérin.

7. Coupe-racines suivant la revendication 6, caractérisé par le fait qu'il comprend, en outre, un dispositif de positionnement angulaire du tambour, comprenant un vérin de blocage (38) monté sur le bâti (3) dans une position sensiblement radiale par rapport au tambour et portant des moyens (40) coopérant avec un bras de lanterne (5) pour bloquer ledit bras lorsque le vérin est alimenté dans un sens et libérer ledit bras lorsque le vérin est alimenté dans l'autre sens.

8. Coupe-racines suivant les revendications 6 et 7, caractérisé par le fait que lesdits moyens (30, 40) du dispositif de rotation pas à pas et du dispositif de positionnement pour coopérer avec les bras de lanterne (5) sous l'action des vérins (26, 33, 38) sont conçus de manière à ne pas pouvoir s'engager entre deux bras de lanterne voisins et à venir, sous l'action des vérins, automatiquement en position de coopération avec un bras de lanterne.

9. Coupe-racines suivant l'une quelconque des revendications précédentes, caractérisé par le fait qu'il comprend, en outre, un dispositif automatique d'introduction d'un porte-couteaux et de retrait d'un porte-couteaux, comprenant un berceau de chargement (50) et un berceau de déchargement (51) montés en position fixe sur le bâti, en avant du côté ouvert du tambour (1), ainsi que des moyens d'introduction d'un porte-couteaux dans le tambour et de retrait d'un porte-couteaux du tambour, lesdits moyens étant animés conjointement d'un mouvement de va-et-vient suivant l'axe du tambour, pour pousser le porte-couteaux du berceau de chargement dans le tambour pendant le mouvement aller et pour retirer un porte-couteaux du tambour sur le berceau de chargement pendant le mouvement de retour.

10. Coupe-racines suivant la revendication 9, caractérisé par le fait que chacun desdits deux berceaux (50, 51) comprend une barre (45, 46) ayant la même section circulaire que les bras de lanterne (5), les deux barres étant disposées sur le cercle décrit par les bras de lanterne, à une distance réciproque correspondant à la distance entre deux bras de lanterne, et un rail de guidage (43, 44) s'étendant, parallèlement à ladite barre, latéralement au-dessus de cette dernière.

11. Coupe-racines suivant la revendication 10, caractérisé par le fait que lesdits moyens d'introduction et de retrait comprennent un chariot (48) guidé sur lesdits rails (43, 44) et portant, en face du berceau de chargement (50), un poussoir (53) à ressort (54) et, en face du berceau de déchargement (51), un crochet (55) susceptible de coopérer avec un nez de retenu (57) formé sur les porte-couteaux (11).

**Patentansprüche**

1. Trommelschneidmaschine zum Schneiden von firstziegelförmigen Rübenschnitzeln, die eine Trommel (1) mit im wesentlichen horizontaler Achse umfasst, die an einer Stirnseite offen und drehbeweglich auf einem Gestell (3) montiert ist, das mit einem Fülltrichter (7), der an der offenen Seite der Trommel mündet, ausgestattet ist, wobei diese Trommel durch ein Rad oder eine Scheibe (4) gebildet wird, die mit einer drehbaren Welle (2) drehfest verbunden ist, und an der eine Vielzahl von achsrechten Stegen (5) auskragend befestigt sind, die entlang dem Scheibenrand verteilt sind, in Richtung zur offenen Seite der Trommel hervorstehen und zwischen sich die Schnitzelmesserkästen (11) aufnehmen, an denen die Messer (12) befestigt sind, die gezackte Schneiden besitzen, wobei die Schneiden der Messer der aufeinanderfolgenden Messerkästen um eine halbe Zackenteilung versetzt sind, und die Messerkästen (11) und die Trommel (1) Mittel (16, 18) umfassen, um die Messerkästen auf der Trommel zu positionieren, dadurch gekennzeichnet, dass die allesamt gleichen Messerkästen (11) so ausgelegt sind, dass jeder von ihnen eine einzige Reihe von Messern (12) aufnimmt, die alle vom gleichen Typ sind und jeder an seinen beiden gegenüberliegenden längsverlaufenden Rändern Kontaktflächen besitzt, die den Trommelstegen (5) angepasst sind und je einen zur Trommel nach innen und einen zur Trommel nach aussen hinterschnittenen Teil besitzen, damit jeder Messerkasten (11) in Achsenrichtung zwischen zwei benachbarten Trommelstegen eingeschoben werden kann und auf den erwähnten Stegen zur Trommel (1) sowohl nach aussen als auch nach innen hin festgehalten wird, und dass die Mittel zur Positionierung der Messerkästen auf der Trommel auf der Scheibe angeordnete Anschläge mit in Achsenrichtung unterschiedlicher Dicke (16, 16a) für die Messerkästen, und Mittel (18) auf der Trommel (1) und den Messerkästen (11) umfassen, um letztere achsrecht an die erwähnten Anschläge anzudrücken.

2. Schneidmaschine gemäss Anspruch 1, dadurch gekennzeichnet, dass die Trommelstege (5) ein kreisförmiges Profil haben und dass die Messerkästen Nuten (15) aufweisen, die ein entsprechendes kreisbogenförmiges Profil haben, wobei der zum Inneren der Trommel hinterschnittene Teil jeder Nut (15) sich über einen Kreisbogen erstreckt, der im wesentlichen gleich 90° ist.

3. Schneidmaschine gemäss Anspruch 1 oder 2, dadurch gekennzeichnet, dass die Mittel (18) zum axialen Andrücken der Messerkästen (11) an die Anschläge (16) durch Klinkvorrichtungen gebildet werden.

4. Schneidmaschine gemäss Anspruch 1, dadurch gekennzeichnet, dass die achsrechten Anschläge abnehmbar auf der Scheibe montiert sind und gegen verschieden dicke Anschläge ausgetauscht werden können.

5. Schneidmaschine gemäss Anspruch 3, dadurch gekennzeichnet, dass die Klinkvorrichtung auf dem Messerkasten oder der Scheibe für jeden Messerkasten zumindest eine Fallklinke (19) mit zwei geneigten Ebenen, die durch eine Feder (20) beaufschlagt wird und auf der Scheibe oder dem Messerkasten eine Klinkschulter (21) umfasst, die ebenfalls zwei geneigte Ebenen für die erwähnte Fallklinke aufweist, und die das Ein- und Ausklinken durch eine achsrechte auf den Messerkasten in die eine oder in die andere Richtung ausgeübte Kraftwirkung und das achsrechte Andrücken gegen den Anschlag ermöglicht.

6. Schneidmaschine gemäss irgendeinem der vorstehenden Ansprüche, dadurch gekennzeichnet, dass sie eine Einrichtung für das schrittweise Drehen der Trommel besitzt, die einen ersten Zylinder (26) umfasst, der Mittel (30) aufweist, die in der Schubrichtung des erwähnten Zylinders mit einem Trommelsteg (5) zusammenwirken können, um die Trommel um einen Schritt zu verdrehen, und einen zweiten Zylinder (33), um die erwähnten Mittel (30) während der Schubbewegung des erwähnten ersten Zylinders in die Lage zu bringen, in der sie mit dem Steg (5) zusammenwirken und sie während der Rückzugsbewegung des erwähnten ersten Zylinders aus der Lage zu bringen, in der sie mit dem Steg zusammenwirken.

7. Schneidemaschine gemäss Anspruch 6, dadurch gekennzeichnet, dass sie ausserdem eine Vorrichtung zur Winkelpositionierung der Trommel besitzt, die einen Sperrzylinder (38) umfasst, der auf dem Gestell (3) in einer im wesentlichen radialen Position im Verhältnis zur Trommel montiert ist, und der Mittel (40) aufweist, die mit einem Trommelsteg (5) zusammenwirken, um diesen Steg festzustellen, wenn der Zylinder in die eine Richtung gespeist wird, und diesen Steg freizugeben, wenn der Zylinder in die andere Richtung gespeist wird.

8. Schneidmaschine gemäss den Ansprüchen 6 und 7, dadurch gekennzeichnet, dass die erwähnten Mittel (30, 40) der schrittweisen Dreheinrichtung und der Positioniereinrichtung, die mit den Trommelstegen (5) unter der Einwirkung der Zylinder (26, 33, 38) zusammenwirken sollen, so ausgelegt sind, dass sie nicht zwischen zwei benachbarten Trommelstegen eingreifen können und unter der Wirkung der Zylinder automatisch in die Stellung für das Zusammenwirken mit einem Trommelsteg gebracht werden.

9. Schneidmaschine gemäss irgendeinem der vorstehenden Ansprüche, dadurch gekennzeichnet, dass sie ausserdem eine automatische Einrichtung zum Einsetzen eines Messerkastens und zum Herausnehmen eines Messerkastens umfasst, die eine Ladeführung (50) und eine Entladeführung (51) umfasst, die auf dem Gestell vor der offenen Seite der Trommel (1) stationär montiert ist, sowie Mittel zum Einführen eines Messerkastens in die Trommel und zum Entfernen eines Messerkastens aus der Trommel, wobei diese Mittel gemeinsam eine Hin- und Herbewegung entlang der Achse der Trommel ausführen, um während der Hinbewegung den Messerkasten von der Ladeführung in die Trommel zu schieben und während der Rückbewegung einen Messerkasten von der Trommel auf die Entladeführung zurückzuziehen.

10. Schneidmaschine gemäss Anspruch 9, dadurch gekennzeichnet, dass jede der beiden Führungen (50, 51) einen Stab (45, 46) umfasst, der denselben runden Querschnitt wie die Trommelstege (5) hat, wobei beide Stäbe auf dem von den Trommelstegen beschriebenen Kreis angeordnet sind, in einer Entfernung voneinander, die der Entfernung zwischen zwei Trommelstegen entspricht, und sich eine Führungsschiene (43, 44) parallel zum erwähnten Stab seitlich über letzterem befindet.

11. Schneidmaschine gemäss Anspruch 10, dadurch gekennzeichnet, dass die erwähnten Mittel zum Einsetzen und Herausnehmen einen Wagen (48) umfassen, der in den erwähnten Führungsschienen (43, 44) läuft und der gegenüber der Ladeführung (50) einen Stössel (53) mit Feder (54) und gegenüber der Entladeführung (51) einen Haken (55) besitzt, der geeignet ist, mit einer auf den Messerkästen (11) ausgebildeten Haltenase (57) zusammenzuwirken.

## Claims

1. Drum-type root slicer serving for cutting beetroots into ridged-tile slices, comprising a drum (1) of substantially horizontal axis, which is open on a front side and which is mounted rotatably on a stand (3) equipped with a feed hopper (7) opening onto the open side of the drum, the said drum being formed from a wheel or cage (4) which is fixed to a shaft (2) driven in rotation and to which is fastened in a cantilevered manner a multiplicity of axial arms (5) distributed over the periphery of the cage, projecting towards the open side of the drum and receiving between them knife-holders (11), to which are fastened knives (12) having zigzag-shaped cutting edges, the cutting edges of the knives of successive knife-holders being offset half a pitch, the knife-holders (11) and the drum (1) having means (16, 18) of positioning the knife-holders on the drum, characterized in that each of the knife-holders (11), all identical, is designed to receive a single row of knives (12), all of a single type and is provided, on its two opposite longitudinal edges, with contact surfaces adapted to the cage arms (5) and possessing a part undercut towards the inside of the drum and a part undercut towards the outside of the latter, so that each knife-holder (11) can be engaged axially by sliding between two adjacent cage arms and is retained on the said arms both towards the outside and towards the inside of the drum (1), and in that the means of positioning the knife-holders on the drum comprise axial stops of different thicknesses (16, 16a) intended for the knife-holders and arranged on the cage, and means (18) provided on the drum (1) and the knife-holders (11) to keep the latter pressed axially against the said stops.

2. Root slicer according to Claim 1, characterized in that the cage arms (5) have a circular profile, and in that the knife-holders have grooves (15) of a corresponding profile in the form of an arc of a circle, the part of each groove (15) undercut towards the inside of the drum extending over an arc of a circle substantially equal to 90°.

3. Root slicer according to Claim 1 or 2, characterized in that the means (18) of keeping the knife-holders (11) pressed axially against the stops (16) consist of snap-engagement devices.

4. Root slicer according to Claim 1, characterized in that the axial stops are fastened to the cage removably and can be exchanged for stops of different thicknesses.

5. Root slicer according to Claim 3, characterized in that the snap-engagement device comprises, on the knife-holder or the cage, for each knife-holder at least one double-slope catch (19) urged by a spring (20) and, on the cage or knife-holder, a likewise double-slope snap-engagement shoulder (21) for the said catch, allowing engagement and disengagement by means of an axial force exerted on the knife-holder in one direction or the other and axial clamping against the stop.

6. Root slicer according to any one of the preceding claims, characterized in that it possesses a device for the step-by-step rotation of the drum, comprising a first jack (26) carrying means (30) capable of interacting with a cage arm (5) in the thrust direction of the said jack, in order to move the drum angularly one step, and a second jack (33) for bringing the said means (30) into the position of interaction with the cage arm (5) during the thrust movement of the said first jack and for bringing them out of the position of interaction with the cage arm during the retraction movement of the said first jack.

7. Root slicer according to Claim 6, characterized in that it also possesses a device for the angular positioning of the drum, comprising a blocking jack (38) mounted on the stand (3) in a substantially radial position relative to the drum and carrying means (40) interacting with a cage arm (5), to block the said arm when the jack is fed in one direction and release the said when the jack is fed in the other direction.

8. Root slicer according to Claims 6 and 7, characterized in that the said means (30, 40) of the step-by-step rotation device and of the positioning device for interacting with the cage arms (5) under the action of the jacks (26, 33, 38) are designed so that they cannot engage between two adjacent cage arms and so that, under the action of the jacks, they automatically come into the position of the interaction with a cage arm.

9. Root slicer according to any one of the preceding claims, characterized in that it also possesses an automatic device for the insertion of a knife-holder and for the removal of a knife-holder, comprising a loading cradle (50) and an unloading cradle (51) which are mounted in a fixed position on the stand, in front of the open side of the drum (1), and means of inserting a knife-holder in the drum and of removing a knife-holder from the drum, the said means being driven jointly in a to-and-from movement along the axis of the drum, in order to push the knife-holder from the loading cradle into the drum during the forward movement and remove a knife-holder from the drum onto the loading cradle during the return movement.

10. Root slicer according to Claim 9, characterized in that each of the said two cradles (50, 51) comprises a bar (45, 46) having the same circular cross-section as the cage arms (5), the two bars being arranged on the circle described by the cage arms at a distance from one another corresponding to the distance between two cage arms, and a guide rail (43, 44) extending parallel to the said bar and laterally above the latter.

11. Root slicer according to Claim 10, characterized in that the said insertion and removal means comprise a carriage (48) guided on the said rails (43, 44) and carrying, opposite the loading cradle (50), a pusher (53) with a spring (54) and, opposite the unloading cradle (51), a hook (55) capable of interacting with a retaining nose (57) formed on the knife-holders (11).

# FIG.1

FIG.2

FIG.3

FIG.4

0 109 691

FIG.5

0 109 691

## FIG.6

## FIG.7

FIG.8